# EUROPEAN PATENT APPLICATION

(11) **EP 4 075 746 A1**
(43) Date of publication of application: **19.10.2022**
(21) Application number: 20928672.3
(22) Date of filing: 27.11.2020
(51) Int. Cl.: H04L 29/06

(54) **APPLICATION LOGIN METHOD AND APPARATUS, ELECTRONIC DEVICE AND STORAGE MEDIUM**

(30) Priority: 30.03.2020 CN 202010235483
(71) Applicant: Beijing Dajia Internet Information Technology Co., Ltd., Beijing 100085 (CN)
(72) Inventor: TAN, Bing, Beijing 100085 (CN); DI, Yifeng, Beijing 100085 (CN); LUO, Jianmin, Beijing 100085 (CN); JIN, Liwen, Beijing 100085 (CN)
(74) Representative: Vossius & Partner Patentanwälte Rechtsanwälte mbB
(86) International application number: PCT/CN2020/132451
(87) International publication number: WO 2021/196673

(57) **Abstract**

An application login method and apparatus, an electronic device and a storage medium, which can reduce the possibility of third-party login failure and improve man-machine interaction efficiency. The method comprises: in response to a display triggering operation of a target user account on a target application login interface, acquiring a target login feature of the target user account, the target login feature comprising at least one of geographical location information of the target user account or login use device parameters (S401); and according to the target login feature, determining third-party channel login information allowed to be used for logging a target application (S402); and according to the third-party channel login information, displaying a corresponding third-party login icon on the target application login interface so as to allow the target user account to select a corresponding target third-party login channel to log in the target application (S403).

## Description

### CROSS-REFERENCE TO RELATED APPLICATION

The present disclosure is based on and claims priority to Chinese Patent Application No. 202010235483.9, filed on March 30, 2020 and entitled "APPLICATION LOGIN METHOD AND APPARATUS, ELECTRONIC DEVICE AND STORAGE MEDIUM", the disclosure of which is hereby incorporated by reference in its entirety.

### TECHNICAL FIELD

Embodiments of the present disclosure relate to the field of data processing, and in particular, to an application login method and apparatus, an electronic device, and a storage medium.

### BACKGROUND

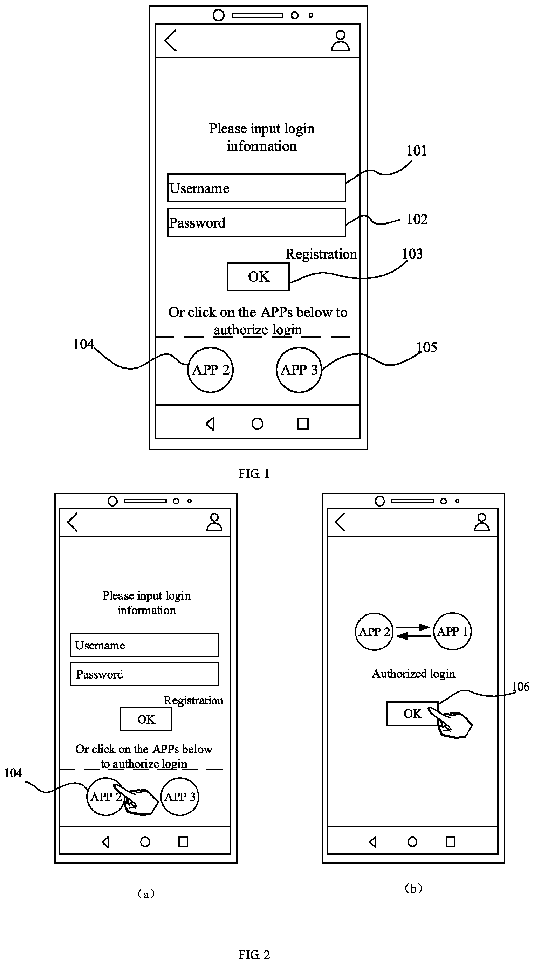

A user generally needs to log in an application (APP) in an electronic device through a user account when using the APP, so as to obtain a better experience. For example, the user may achieve login of a user account by inputting corresponding login information (such as a username, a password, etc.) on a login interface of the application displayed on the electronic device. FIG 1 illustrates a schematic diagram of a login interface for an application (such as APP 1). As shown in FIG. 1, the user may enter a usemame in a "username" input box 101, and enter a password in a "password" input box 102, and then click an "ok" button 103 to achieve login of APP 1 through the user account.

In addition, the user may also achieve login of the user account through third-party login. In the third-party login solution, different applications may share login information, so that when the user wants to log in an application through a user account, quick login is achieved by authorizing the user through other applications that the user account has logged in. As shown in FIG 1, the login interface of APP 1 displayed on the electronic device may further include one or more third-party login icons (2 third-party login icons such as icon 104 and icon 105 are illustrated in FIG 1) for performing third-party login. As an example, FIG 2 shows a schematic diagram of a third-party login. In conjunction with FIG 1, as shown in (a) of FIG 2, the user may click on the third-party login icon 104 on the login interface to trigger the authorization of third-party login to APP 1 through APP 2. In response to this operation, the electronic device may display an interface as shown in (b) of FIG 2. On the interface, the user may click on the "OK" button 106 to achieve authorized login to the user account of APP 1 through APP 2.

It can be seen that third-party login does not need the user to input login information, and only needs authorization through clicking, so that login of a user account is more convenient. However, for the electronic device, since the process of the third-party login involves running and authorization processing of at least 2 APPs, when a problem occurs in one of the processes, for example APP 2 has a running error, or the authorization fails, the third-party login fails. In response to failure of the third-party login, the user needs to perform the above operations again, for example clicking the icon 104 and clicking the "ok" button 106, or instead performing the login of a user account by inputting login information.

### SUMMARY

The present disclosure relates to methods and apparatuses for application login, an electronic device, and a storage medium. The embodiments of the present disclosure adopt the following technical solutions.

In a first aspect, a method for application login is provided. The method includes: in response to a target user account's operation for triggering and displaying a target application login interface, acquiring a target login feature of the target user account, and the target login feature includes at least one of geographical location information of the target user account or parameters of a device used for logging in; determining, according to the target login feature, information of third-party login channels allowed to be used for logging in the target application; displaying, according to the information of third-party login channels, corresponding third-party login icons on the target application login interface to allow the target user account to select a corresponding target third-party login channel to log in the target application.

In a second aspect, a method for application login is provided. The method includes: receiving a target login feature of a target user account from user equipment, and the target login feature includes at least one of geographical location information of the target user account or parameters of a device used for logging in; determining, according to the target login feature, information of third-party login channels allowed for logging in a target application; and transmitting the information of third-party login channels to the user equipment.

In a third aspect, an apparatus for application login is provided. The apparatus includes: an acquisition module, configured to, in response to a target user account's operation for triggering and displaying a target application login interface, acquire a target login feature of the target user account, and the target login feature includes at least one of geographical location information of the target user account or parameters of a device used for logging in; a determination module, configured to determine, according to the target login feature, information of third-party login channels allowed for logging in the target application; a display module, configured to display, according to the information of third-party login channels, corresponding third-party login icons on the target application login interface to allow the target user account to select a corresponding target third-party login channel to log in the target application.

In a fourth aspect, an apparatus for application login is provided. The apparatus includes: a reception module, configured to receive a target login feature of a target user account from user equipment, and the target login feature includes at least one of geographical location information of the target user account or parameters of a device used for logging in; a determination module, configured to determine information of third-party login channels allowed for logging in the target application according to the target login feature; and a transmission module, configured to transmit the information of third-party login channels to the user equipment.

In a fifth aspect, an electronic device is provided, including: a processor and a memory for storing processor-executable instructions. The processor is configured to execute the instructions to implement operations of: in response to a target user account's operation for triggering and displaying a target application login interface, acquiring a target login feature of the target user account, and the target login feature includes at least one of geographical location information of the target user account or parameters of a device used for logging in; determining, according to the target login feature, information of third-party login channels allowed to be used for logging in a target application; and displaying, according to the information of third-party login channels, corresponding third-party login icons on the target application login interface to allow the target user account to select a corresponding target third-party login channel to log in the target application.

In a sixth aspect, a server is provided, the server includes: a processor and a memory for storing processor-executable instructions. The processor is configured to: receive a target login feature of a target user account from user equipment, and the target login feature includes at least one of geographical location information of the target user account or parameters of a device used for logging in; determine, according to the target login feature, information of third-party login channels allowed for logging in the target application; and transmit the information of third-party login channels to the user equipment.

In a seventh aspect, a system for application login is provided; the system includes an apparatus for application login according to the first aspect, and an apparatus for application login according to the second aspect. Alternatively, the system includes an electronic device according to the third aspect and a server according to the fourth aspect.

In an eighth aspect, a computer-readable storage medium is provided, the computer-readable storage medium has instructions stored thereon, where the instructions, when executed by the processor, are used for implementing operations of: in response to a target user account's operation for triggering and displaying a target application login interface, acquiring a target login feature of the target user account, the target login feature includes at least one of geographical location information of the target user account or parameters of a device used for logging in; determining, according to the target login feature, information of third-party login channels allowed to be used for logging in the target application; and displaying, according to the information of third-party login channels, corresponding third-party login icons on the target application login interface to allow the target user account to select a corresponding target third-party login channel to log in the target application.

In an ninth aspect, a computer-readable storage medium is provided, the computer-readable storage medium has instructions stored thereon, where the instructions, when executed by the processor, are used for implementing operations of: receiving a target login feature of a target user account from a user equipment, the target login feature includes at least one of geographical location information of the target user account or parameters of a device used for logging in; determining, according to the target login feature, information of third-party login channels allowed for logging in the target application; and transmitting the information of third-party login channels to the user equipment.

It should be understood that the above general description and the following detailed description are merely exemplary and explanatory, and cannot limit the present disclosure.

### BRIEF DESCRIPTION OF THE DRAWINGS

FIG. 1 is a schematic diagram illustrating a login interface of an application;
FIG 2 is a schematic diagram illustrating a third-party login interface;
FIG. 3 is a schematic diagram illustrating an implementation environment according to the embodiments of the present disclosure;
FIG. 4 is a schematic flowchart of a method for application login according to the embodiments of the present disclosure;
FIG 5 is a schematic diagram illustrating an interface of an opened application according to the embodiments of the present disclosure;
FIG. 6 is a schematic flowchart of another application login method according to the embodiments of the present disclosure;
FIG 7 is a schematic diagram illustrating a third-party login interface according to the embodiments of the present disclosure;
FIG. 8 is a schematic flowchart of another application login method according to the embodiments of the present disclosure;
FIG. 9 is a schematic flowchart of another application login method according to the embodiments of the present disclosure;
FIG. 10 is a schematic diagram illustrating composition of an apparatus for application login according to the embodiments of the present disclosure;
FIG. 11 is a schematic diagram illustrating composition of another application login apparatus according to the embodiments of the present disclosure;
FIG 12 is a schematic diagram illustrating composition of another application login apparatus according to the embodiments of the present disclosure;
FIG. 13 is a schematic diagram illustrating composition of another application login apparatus according to the embodiments of the present disclosure;
FIG 14 is a schematic diagram illustrating composition of another application login apparatus according to the embodiments of the present disclosure.
FIG 15 is a schematic diagram illustrating composition of an electronic device according to the embodiments of the present disclosure.

### DETAILED DESCRIPTION

First, an application scenario of technical solutions provided by the present disclosure is introduced.

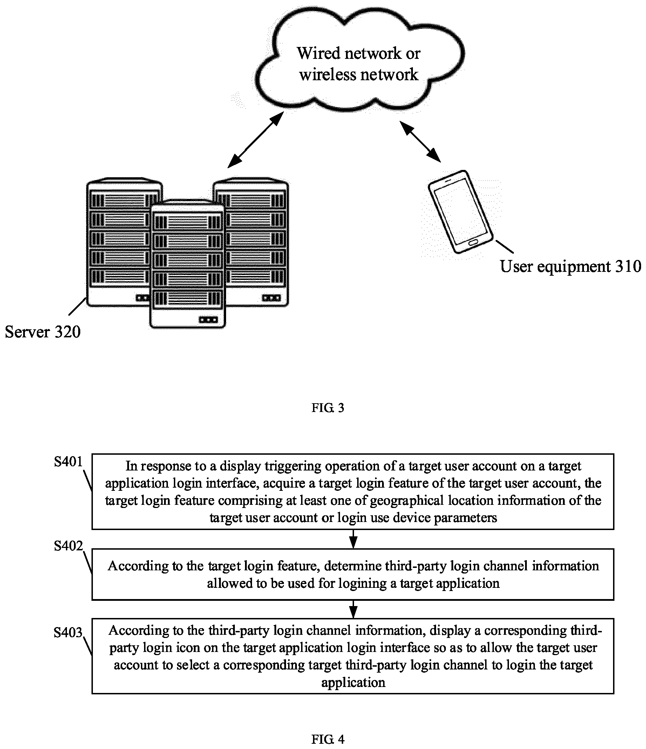

Please refer to FIG 3, which is a schematic diagram illustrating an implementation environment according to the embodiments of the present disclosure. The application login method may be applied to the implementation environment.

As shown in FIG 3, the implementation environment may include user equipment 310 and a server 320, and the user equipment 310 may establish a connection with the server 320 through a wired or wireless network. It should be noted that, in the embodiments of the present disclosure, the user equipment may also be referred to as an electronic device.

In some embodiments, the implementation environment may further include more user equipment, and the user equipment may also establish a connection with the server 320 through a wired network or a wireless network.

The user equipment 310 is a device used by the user. The user equipment 310 may be used to receive a user operation on an application installed in the user equipment 310, and respond to the operation. For example, the user equipment 310 may be configured to: in response to a target user account's operation for triggering and displaying a target application login interface, acquire a target login feature of the target user account, and the target login feature includes at least one of geographical location information of the target user account or parameters of a device used for logging in; determine, according to the target login feature, information of third-party login channels allowed for logging in the target application; and display, according to the information of third-party login channels, corresponding third-party login icons on the target application login interface to allow the target user account to select a corresponding target third-party login channel to log in the target application. In addition, the user equipment 310 may also be configured to interact with the server 320 to implement the application login method provided by the embodiments of the present disclosure. For example, the user equipment 310 may transmit login feature information to the server 320, e.g., the login feature information may include at least one of geographical location information of the target user account or parameters of a device used for logging in. For another example, the user equipment 310 may acquire a login monitoring result of the third-party login channels from the server 320, and the login monitoring result includes third-party login channels supported to perform login by user accounts having different login features; the login feature includes at least one of geographical location information of a corresponding user account or parameters of a device used for logging in. The user equipment 310 may be configured to select, from the login monitoring result, a third-party login channel corresponding to the target login feature, and obtain the information of third-party login channels allowed to be used for logging in the target application accordingly.

The user equipment 310 may be provided with a camera, or may be connected with a camera to perform live video broadcast through the camera. The user equipment 310 may be a mobile phone, a tablet computer, a notebook computer, a desktop computer, a portable computer, and the like, and the embodiments of the present disclosure are not limited herein.

The server 320 is configured to mainly collect and store data. As an example, the server 320 may be configured to receive the target login feature of the target user account from the user equipment, the target login feature includes at least one of geographical location information of the target user account or parameters of a device used for logging in; determine, according to the target login feature, information of third-party login channels allowed for logging in the target application; and transmit the information of third-party login channels to the user equipment. In some embodiments, the server 320 may be a server cluster comprised of multiple servers. In other embodiments, the server 320 may be a server for implementing all the functions involved in the above application login method. The embodiments of the present disclosure are not limited herein.

Please refer to FIG 4, which is a schematic flowchart of a method for application login according to the embodiments of the present disclosure. The method may be applied to the user equipment 310 as shown in FIG. 3. As shown in FIG. 4, the method may include S401-S403, where the user account that wishes to perform third-party login is taken as a target user account, and the application to be logged in is taken as a target application.

In S401, in response to the target user account's operation of triggering and displaying a target application login interface, a target login feature of the target user account is acquired, and the target login feature includes at least one of geographical location information of the target user account or parameters of a device used for logging in.

When the user wants to use the target application, the user may input an operation of opening the target application on the electronic device. For example, the user may touch an icon of the target application included on the interface displayed by the electronic device. In response to the touch operation, the electronic device may open the target application and display the corresponding interface.

In some embodiments, the operation of the user for opening the login interface of the target application may be a user's touch operation (such as a click operation) on the icon of the target application. For example, when the target application is opened, in a case that the target application is not logged in through the user account, the electronic device may be directly triggered to display the login interface of the target application. For example, the login interface may be the interface as shown in FIG 1 or as shown in (a) of FIG. 2.

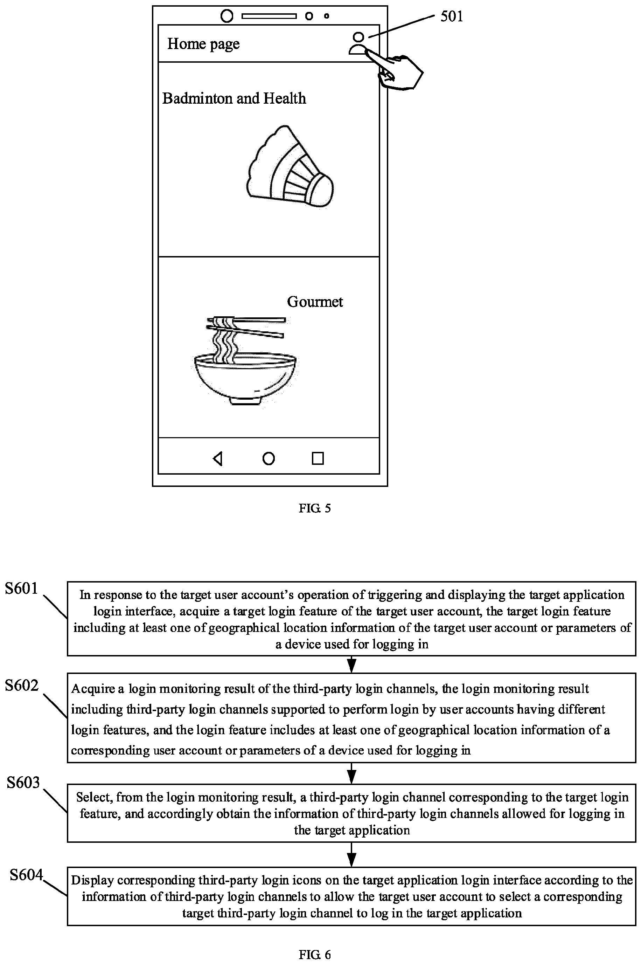

In some other embodiments, the operation of the user for opening the login interface of the target application may be a touch operation (such as a click operation) on a corresponding icon for switching to the login interface after the user opens the target application. For example, the electronic device may display the interface as shown in FIG 5 when the target application is opened. The user may click on a "user center" button 501 on the interface to complete the operation for opening the login interface. In response to this operation, the electronic device may display the login interface as shown in FIG 1 or as shown in (a) of FIG 2.

Upon receiving the target user account's operation of triggering and displaying the target application login interface, the electronic device may acquire the target login feature of the target user account, and the target login feature includes at least one of geographical location information of the target user account or parameters of a device used for logging in. In this way, the electronic device may determine the feature corresponding to the third-party login so as to determine the third-party login channel allowed for logging in the target application.

As an example, the geographical location information of the target user account includes, but is not limited to, longitude and latitude information of the electronic device and/or location information of a base station corresponding to a cell providing communication resources for the electronic device. The parameters of a device used for logging in may include system information and/or a model number of the electronic device. For example, the system information of the electronic device may include information such as a current baseband version and a system version of the electronic device. The model number of the electronic device may include information such as a brand and a model number of the electronic device.

In S402, information of third-party login channels allowed for logging in the target application is determined according to the target login feature.

According to the acquired target login feature of the target user account, the electronic device may determine the information of third-party login channels which conform to the feature and are allowed for logging in the target application. It may be appreciated that a higher login success rate may be obtained by the third-party login through the third-party channel determined based on the login feature.

As an example, the information of third-party login channels may include one or more third-party login channels determined to be allowed for logging in the target application.

In the embodiments of the present disclosure, the electronic device may determine, according to information related to historical login, the third-party login channels which are allowed to log in the target application and correspond to the login feature corresponding to the current login.

For example, the electronic device may determine, according to the a plurality of login monitoring results and corresponding login features thereof, a login result of a historical login with the target login feature, and further determine success rates (or failure rates) corresponding to different third-party login channels, and determine a third-party login channel with a higher login success rate (or a lower failure rate) as the login channel allowed for logging in the target application. In some embodiments, the electronic device may further determine the login channel for logging in the target application in combination with results of a historical login process of the local machine (i.e., all have target login features), so that accuracy of determining the login channel can be improved.

It should be noted that, the login monitoring result corresponding to different login features may be acquired by the electronic device from the server. In addition, the above-mentioned third-party channel allowed for logging in the target application may be determined by the server based on the target login feature transmitted from the electronic device, or may be determined by the electronic device itself after acquiring different login monitoring results.

In S403, corresponding third-party login icons are displayed on the target application login interface based on the information of third-party login channels to allow the target user account to select a corresponding target third-party login channel to log in the target application.

After determining the above-mentioned information of third-party login channels, the electronic device may display icons corresponding to the third-party login channel included in the information of third-party login channels on the interface, so that the target user account may select a corresponding channel to perform the third-party login of the target application.

In this way, before the icons of the third-party login channels are displayed, third-party login channels capable of normally logging in the target application are screened according to the feature information of the current target user account. The icons corresponding to the screened out login channels are displayed on the login interface, so that the user can log in by selecting a corresponding third-party login channel that is determined to be capable of normally logging in the target application. The login efficiency can be effectively improved, and the user's use experience of the application can be improved.

Please refer to FIG. 6, which is a schematic flowchart of another application login method according to the embodiments of the present disclosure. The method may be applied to the user equipment 310 as shown in FIG. 3. As shown in FIG. 6, the method may include S601-S604, where the user account that desires to perform third-party login is taken as the target user account, and the application to be logged in is taken as the target application.

In S601, in response to the target user account's operation of triggering and displaying the target application login interface, a target login feature of the target user account is acquired, and the target login feature includes at least one of geographical location information of the target user account or parameters of a device used for logging in.

This step is similar to S401 shown in the above-mentioned FIG 4, and its specific implementation method may also be referred to, which will not be described in detail herein.

In S602, a login monitoring result of the third-party login channels is acquired. The login monitoring result includes third-party login channels that are supported to perform login by user accounts having different login features. The login feature includes at least one of geographical location information of a corresponding user account or parameters of a device used for logging in.

In S603, a third-party login channel corresponding to the target login feature is selected from the login monitoring result, and the information of third-party login channels allowed for logging in the target application is accordingly obtained.

As an example, in some embodiments, the electronic device may acquire all user accounts' account login results for logging in the target application through different third-party login channels in a preset monitoring period. The account login result at least includes whether a corresponding user account successfully logged in the target application through a corresponding third-party login channel or not. For example, three user accounts, namely user 1, user 2 and user 3, have logged in the target application through the third-party login channel within the preset monitoring period. User 1 performs the third-party login by logging in the target application through login channel 1, user 2 performs the third-party login by logging in the target application through login channel 2, and user 3 performs the third-party login by logging in the target application through login channel 3. Then the electronic device may acquire a login result of user 1 for logging in through login channel 1, the electronic device may also acquire a login result of user 2 for logging in through login channel 2, and the electronic device may also acquire a login result of user 3 for logging in through login channel 3.

The electronic device may, according to all the account login results and the login feature of the user account corresponding to each of the account login results, acquire login failure rates of different third-party login channels as for each distinct login feature. According to the login failure rates of different third-party login channels as for each distinct login feature, a third-party login channel with a login failure rate below a preset failure rate threshold is determined as a third-party login channel supported to log in by the user account having the distinct login feature, and the login monitoring result is accordingly obtained. The electronic device may select, from the login monitoring result, candidate third-party login channels corresponding to the target login feature. A candidate third-party login channel whose a single-user login failure rate is below a preset single-user failure rate threshold is selected, and the information of third-party login channels allowed for logging in the target application is accordingly obtained.

That is, the login monitoring result may include different third-party login channels of different login features. The login failure rate of each login channel in the third-party login channels is lower than a preset threshold. That is, when the target application is logged in on the user account having the corresponding login feature by using the third-party login channel included in the login detection result, there is a high possibility that the third-party login can be successfully completed.

It should be noted that, in the above example, the electronic device determines, according to the acquired login situation of other user accounts, the third-party login channel that meets the requirements by itself. Alternatively, in some other implementations, the electronic device may also transmit the target login feature to the server, so as to trigger the server to determine, according to the target login feature, determine the information of third-party login channels allowed for logging in the target application and return the information of third-party login channels.

It can be seen that, in the above example, the description is made by taking an example where the electronic device determines, according to historical login data of the third-party login performed by other user accounts, a channel with a higher third-party login success rate among current third-party logins. In some other embodiments of the present disclosure, the electronic device may further determine a channel with a higher third-party login success rate by referring to the login historical information of the target user account for the target application.

As an example, the electronic device may also acquire the target user account's target login result for logging in the target application through different third-party login channels within a preset single-user monitoring period. The target login result includes at least whether the target user account successfully logged in the target application through the corresponding third-party login channel or not. According to the target login result, the login failure rates of the target user account through different third-party login channels are acquired. When the login failure rate of a third-party login channel is smaller than the preset threshold, the third-party login channel is determined as a third-party login channel through which the target user account is allowed to perform the target application login.

It should be noted that, because the historical login information of the target user account of the electronic device is closer to the state of the current login, the third-party login can be ensured to be performed more smoothly by determining, with reference to the historical login information of the target user account, the third-party login channel through which the target user account is allowed to perform the target application login.

In addition, the above two methods for determining the third-party login channel through which the target user account is allowed to perform the target application login provided by the above example may be flexibly selected according to specific situations, and may also be used at the same time to improve the accuracy of judgment, which is not limited by the embodiment of the present disclosure.

It should be noted that, in the embodiments of the present disclosure, the electronic device may acquire the login monitoring result according to the preset period, so as to update the login monitoring result in time, and thus acquiring a more accurate judgment basis.

In S604, corresponding third-party login icons are displayed on the target application login interface according to the information of third-party login channels to allow the target user account to select a corresponding target third-party login channel to log in the target application.

After determining the information of third-party login channels through which the target user account is allowed to log in the target application, the electronic device may determine, according to the channel information, channels through which the third-party login can be successfully completed among all the third-party logins supported by the target application, and display these channels on the login interface.

As an example, the electronic device may acquire a set of third-party login icons supported and displayed by the target application login interface. In the set of the third-party login icons, the third-party login icons corresponding to the third-party login channels that are not included in the information of third-party login channels are hidden on the target application login interface, so as to enable the displayed third-party login icons to correspond to the third-party channel information.

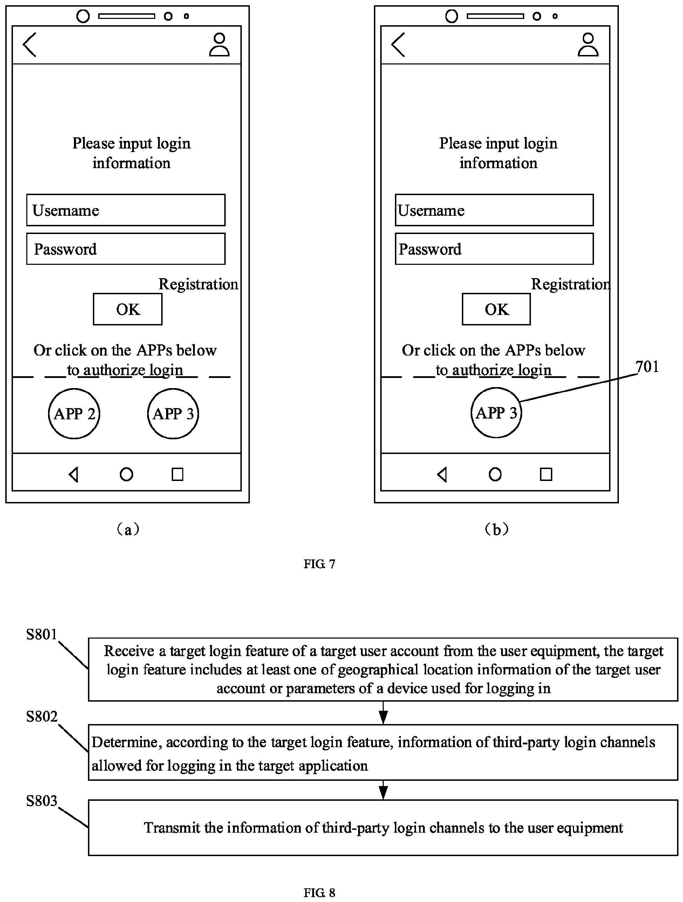

For example, the set of third-party login icons, which is acquired by the electronic device and are supported and displayed by the target application login interface, may include APP 2 and APP 3. When all the third-party login icons supported are displayed on the login interface, the login interface may be as shown in (a) of FIG. 7. Through the above S601-S602, the electronic device may determine that APP 3 is included in the information of third-party login channels and APP 2 is not included in the information of third-party login channels. Then the electronic device may display a login interface as shown in (b) of FIG. 7. It can be seen that, on the login interface, the icon of APP 2 is hidden, and the user will not trigger third-party login through APP 2 via an input operation. When desiring to perform a third-party login, a user can input a corresponding operation (such as a touch operation) to the icon 701, so as to trigger the electronic device to log in through the third-party channel corresponding to APP 3.

Therefore, by reasonably utilizing the login results of different third-party login channels corresponding to different login feature information, the channels through which the current target user account is allowed to successfully complete third-party login are determined, and these channels are displayed on the login interface, so that the user may successfully perform the third-party login through the channels. Therefore, the login efficiency can be effectively improved, and the user's use experience of the application can be improved.

It can be seen that, in the above method as shown in FIG. 6, the electronic device may also acquire corresponding information through the server, so as to determine the information of third-party login channels through which the target user account is allowed to perform a target application login. The method is described in detail below with reference to examples. As an example, please refer to FIG 8, which is another application login method provided in the embodiments of the present disclosure. The method may be applied to the server 320 as shown in FIG. 3, where an application that a user wants to log in through the electronic device is taken as a target application, and a user account of the user is taken as a target user account. As shown in FIG. 8, the method may include S801-S803.

In S801, a target login feature of a target user account is received from the electronic device, and the target login feature includes at least one of geographical location information of the target user account or parameters of a device used for logging in.

In S802, information of third-party login channels allowed for logging in the target application is determined according to the target login feature.

As an example, the server may acquire a login monitoring result of the third-party login channels. The login monitoring result includes third-party login channels that are supported to perform login by user accounts having different login features. The login features include at least one of geographical location information of a corresponding user account or parameters of a device used for logging in. A third-party login channel corresponding to the target login feature is selected from the login monitoring results, and the information of third-party login channels allowed for logging in the target application is accordingly obtained. It can be seen that, among a plurality of stored login monitoring results, the server may screen out the login results corresponding to different third-party login channels in the historical login process corresponding to the target login feature, and determine the information of third-party login channels allowed for logging in the target application. Therefore, the prediction of the third-party login to be performed is achieved according to the historical login situation, so as to avoid unsuccessful third-party login through the third-party login channel with a lower failure rate.

In some embodiments, the server may acquire the login monitoring result of the third-party login channels through the following methods: acquiring all user accounts' account login results for logging in the target application through different third-party login channels in a preset monitoring period. The account login results include at least whether the corresponding user account successfully logged in the target application through the corresponding third-party login channel or not. According to all the account login results and the login feature of the user account corresponding to each of the account login results, login failure rates of different third-party login channels as for each distinct login feature is acquired. According to the login failure rates of the different third-party login channels as for each distinct login feature, a third-party login channel with a login failure rate below a preset failure rate threshold is determined as the third-party login channel supported to log in by the user account having the distinct login feature, and the login monitoring result is accordingly obtained. Therefore, the server may acquire third-party login results of a plurality of different accounts, and by storing these login monitoring result, the server can determine the third-party login channel with a lower login failure rate in the third-party login process with a specific login feature (such as a target login feature).

It should be noted that, the server may acquire the login monitoring result of the third-party login channel as required by the electronic device, or acquire it by itself according to a preset period, and certainly may also acquire it in real time every time a user account performs the third-party login. The embodiment of the present disclosure is not limited thereto.

In S803, the information of third-party login channels is transmitted to the electronic device.

After obtaining the information of third-party login channels allowed for logging in the target application, the server may transmit the information to the electronic device, so that the electronic device can know, according to the information, third-party channels through which the third-party login may be performed on the target application without the problem of login failure.

Therefore, the server may, according to a historical third-party login situation, determine third-party login channels corresponding to the feature information of the target user account of the electronic device, and select a channel through which the third-party login can be smoothly performed (for example the login failure rate is smaller than a preset threshold) and transmit it to the electronic device, so as to prevent the electronic device from displaying icons which possibly cannot smoothly complete the third-party login to the user, this may further avoid the problems that the user operation is too complicated and the electronic device runs extra burden due to the third-party login failure, and improve the human-machine interaction efficiency.

In order to more clearly explain the solution provided by the embodiments of the present disclosure, a specific execution process is exemplarily explained below as for a case where the electronic device acquires corresponding login channel information through interaction with the server.

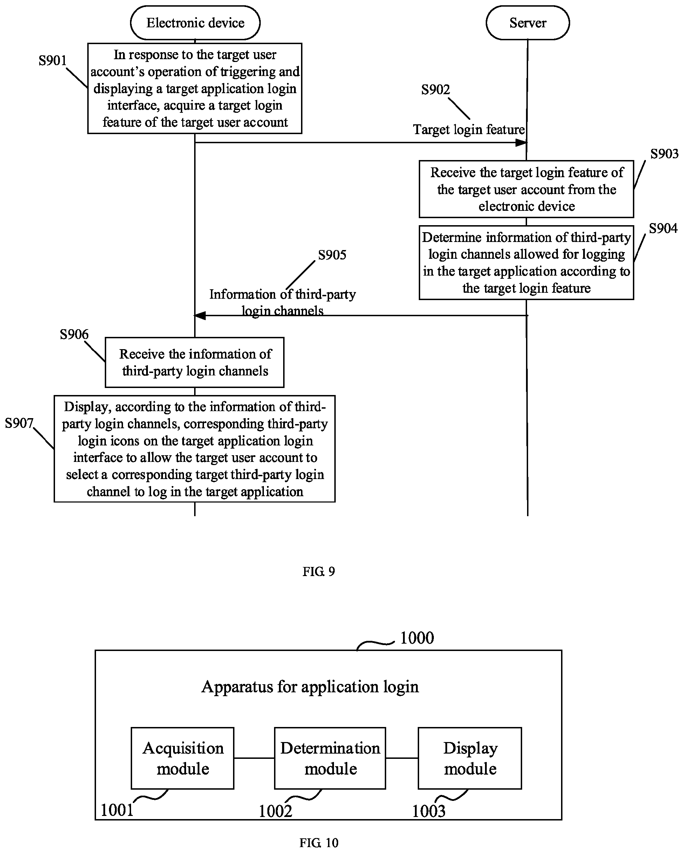

Please refer to FIG. 9, which is another application login method provided in the embodiments of the present disclosure, where an application that a user wants to log in through the electronic device is taken as a target application, and a user account of the user is taken as a target user account. As shown in FIG 9, the method may include S901-S907.

In S901, in response to the target user account's operation of triggering and displaying the target application login interface, the electronic device acquires a target login feature of the target user account. The target login feature includes at least one of geographical location information of the target user account or parameters of a device used for logging in.

In S902, the electronic device transmits the target login feature to the server.

In S903, the server receives the target login feature of the target user account from the electronic device.

In S904, the server determines the information of third-party login channels allowed for logging in the target application according to the target login feature.

In S905, the server transmits the information of third-party login channels to the electronic device.

In S906, the electronic device receives the information of third-party login channels.

**In** S907, the electronic device displays corresponding third-party login icons on the target application login interface according to the information of third-party login channels, so as to allow the target user account to select a corresponding target third-party login channel to log in the target application.

It should be noted that all the steps described in the above-mentioned S901-S907 may correspond to the method steps as shown in FIG 4, FIG. 6, or FIG 8, and the specific implementation thereof is similar, which will not be described in detail herein.

It can be seen that the operation of screening and determining the information of third-party login channels allowed for logging in the target application is performed by the server, so that the working pressure of the electronic device can be effectively reduced, and meanwhile the information of third-party login channels can be quickly and effectively acquired. By displaying corresponding icons on the login interface according to the information of third-party login channels, the login efficiency is effectively improved, and the user's use experience of the application is improved.

The solutions provided by the embodiments of the present disclosure are introduced above mainly from the perspective of an electronic device/server. It may be appreciated that the electronic device/server may respectively implement the above-mentioned functions through an apparatus for application login configured therein. In order to implement the above-mentioned functions, the application login apparatus includes corresponding hardware structures and/or software modules for executing various functions, and the hardware structures and/or software modules for executing the various functions may constitute an electronic device. Those skilled in the art should readily appreciate that the present disclosure can be implemented in the form of hardware or a combination of hardware and computer software for performing the exemplary algorithm steps described in connection with the embodiments disclosed herein. Whether a function is executed by hardware or computer software-driven hardware depends on the specific application and design constraints conditions of the technical solution. Professionals and technicians may use different methods for each specific application to implement the described functions, but such implementation should not be considered as causing a departure from the scope of the present disclosure.

Embodiments of the present disclosure may divide the electronic device/server into functional modules according to the above-mentioned method examples. For example, the electronic device/server may include an apparatus for application login; the apparatus for application login may be divided into various functional modules corresponding to various functions, or may integrate two or more functions into one processing module. The above-mentioned integrated module may be implemented either in the form of hardware or as software function module. It should be noted that the division of the modules in the embodiments of the present disclosure is illustrative, and is only one logical function division, and there may be another division methods in actual implementation.

In the case of dividing various functional modules according to various functions, FIG. 10 shows a schematic diagram of a possible composition of an apparatus 1000 for application login according to the above-mentioned embodiment, where the application login apparatus 1000 may be used to implement the corresponding functions of the electronic device. As shown in FIG 10, the application login apparatus 1000 may include an acquisition module 1001, a determination module 1002 and a display module 1003.

The acquisition module 1001 is configured to: in response to a target user account's operation for triggering and displaying a target application login interface, acquire a target login feature of the target user account, and the target login feature includes at least one of geographical location information of the target user account or parameters of a device used for logging in.

The determination module 1002 is configured to determine, according to the target login feature, the information of third-party login channels allowed for logging in the target application.

The display module 1003 is configured to: display, according to the information of third-party login channels, corresponding third-party login icons on the target application login interface to allow the target user account to select a corresponding target third-party login channel to log in the target application.

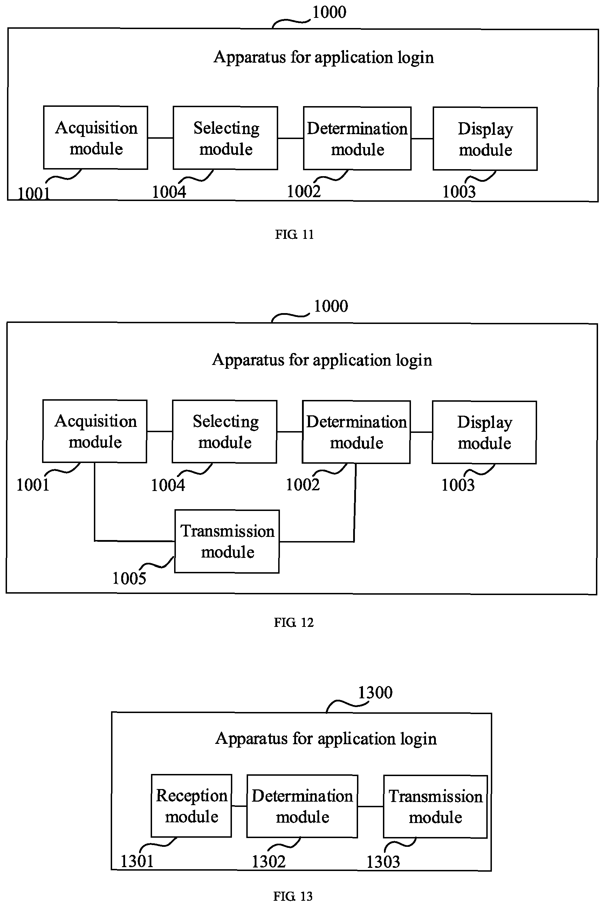

In some embodiments, as shown in FIG. 11, the application login apparatus 1000 may further include a selecting module 1004.

The acquisition module 1001 is configured to acquire a login monitoring result of the third-party login channels. The login monitoring result includes third-party login channels that are supported to perform login by user accounts having different login features. The login feature includes at least one of geographical location information of a corresponding user account or parameters of a device used for logging in.

The selecting module 1004 is configured to select a third-party login channel corresponding to the target login feature from the login monitoring result, and accordingly obtain the information of third-party login channels allowed for logging in the target application.

In some embodiments, the acquisition module 1001 is configured to acquire all user accounts' account login results for logging in the target application through different third-party login channels in a preset monitoring period. The account login results include at least whether the corresponding user account successfully logged in the target application through the corresponding third-party login channel or not.

The acquisition module 1001 is configured to acquire, according to all the account login results and the login feature of the user account corresponding to each of the account login results, a login failure rate of different third-party login channels as for each distinct login feature.

The determination module 1002 is configured to determine, according to the login failure rate of different third-party login channels as for each distinct login feature, the third-party login channel with a login failure rate below a preset failure rate threshold as a third-party login channel supported to log in by the user account having the login feature, and accordingly obtain the login monitoring results.

In some embodiments, the login monitoring results further include a single-user login failure rate of the target user account through different third-party login channels.

The selecting module 1004 is configured to select a candidate third-party login channel corresponding to the target login feature from the login monitoring result.

The selecting module 1004 is configured to select the candidate third-party login channel with the single-user login failure rate below a preset single-user failure rate threshold, and accordingly obtain the information of third-party login channels allowed for logging in the target application.

In some embodiments, the acquisition module 1001 is configured to acquire the target user account's a target login result for logging in the target application through different third-party login channels in a preset single-user monitoring period. The target login result includes at least whether the target user account successfully logs in the target application through the corresponding third-party login channel or not.

The acquisition module 1001 is configured to acquire, according to the target login result, the target user account's login failure rate through different third-party login channel.

In some embodiments, the acquisition module 1001 is configured to acquire login monitoring results of the third-party login channel according to a preset acquisition period.

In some embodiments, the acquisition module 1001 is configured to acquire a set of third-party login icons supported and displayed by the target application login interface.

The display module 1003 is configured to, on the target application login interface, hide third-party login icons in the set of third-party login icons that correspond to the third-party login channels not included in the information of third-party login channels to enable the displayed third-party login icons to correspond to the third-party channel information.

In some embodiments, as shown in FIG. 12, the application login apparatus 1000 may further include a transmission module 1005.

The transmission module 1005 is configured to transmit the target login feature to a server to trigger the server to determine, according to the target login feature, the information of third-party login channels allowed for logging in the target application and return the information of third-party login channels.

With regard to the apparatus in the above-mentioned embodiments, where the specific way in which each module performs the operation has been described in detail in the embodiments relating to the method, and will not be described in detail herein.

The embodiments of the present disclosure further provide an electronic device, including a processor and a memory for storing the processor-executable instructions. The processor is configured to execute the instructions to implement the application login method corresponding to the electronic device in the above illustrated embodiment.

The embodiments of the present disclosure further provide a computer-readable storage medium with instructions stored thereon. When the instructions in the storage medium are executed by the processor of the computer device, the computer is enabled to execute the application login method corresponding to the electronic device in the above illustrated embodiment.

The embodiments of the present disclosure further provide a computer program product containing instructions that, when run on a computer, enable the computer device to execute the application login method corresponding to the electronic device in the above illustrated embodiment.

In the case of dividing various functional modules according to various functions, FIG. 13 shows a schematic diagram of a possible composition of the application login apparatus 1300 according to the above-mentioned embodiment. The application login apparatus 1300 may be used to implement the functions corresponding to the server. As shown in FIG 13, the application login apparatus 1300 may include a reception module 1301, a determination module 1302 and a transmission module 1303.

The reception module 1301 is configured to receive a target login feature of a target user account from the user equipment, the target login feature includes at least one of geographical location information of the target user account or parameters of a device used for logging in.

The determination module 1302 is configured to determine, according to the target login feature, the information of third-party login channels allowed for logging in the target application.

The transmission module 1303 is configured to transmit the information of third-party login channels to the user equipment.

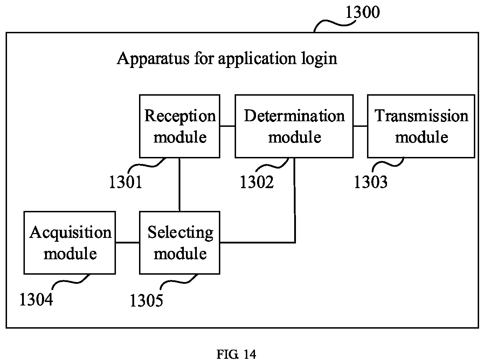

In some embodiments, as shown in FIG 14, the application login apparatus 1300 further includes: an acquisition module 1304, configured to acquire a login monitoring result of the third-party login channels, where the login monitoring result includes third-party login channels that are supported to perform login by user accounts having different login features, and the login feature includes at least one of geographical location information of a corresponding user account or parameters of a device used for logging in; a selecting module 1305, configured to: select a third-party login channel corresponding to the target login feature from the login monitoring result, and obtain the information of third-party login channels allowed for logging in the target application accordingly.

In some embodiments, the acquisition module 1304 is configured to: acquire all user accounts' account login results for logging in the target application through different third-party login channels, in a preset monitoring period; the account login result includes at least whether the corresponding user account successfully logged in the target application through the corresponding third-party login channel or not.

The acquisition module 1304 is configured to acquire, according to all the account login results and the login feature of the user account corresponding to each of the account login results, login failure rates of different third-party login channels as for each distinct login feature.

The determination module 1302 is configured to determine, according to the login failure rates of different third-party login channels as for each distinct login feature, a third-party login channel with a login failure rate below a preset failure rate threshold as a third-party login channel supported to log in by the user account having the login feature, and obtain the login monitoring results accordingly.

In some embodiments, the acquisition module 1304 is configured to acquire the login monitoring result of the third-party login channel according to a preset acquisition period.

With regard to the apparatus in the above-mentioned embodiments, where the specific way in which each module performs the operation has been described in detail in the embodiments relating to the method, and will not be described in detail herein.

The embodiments of the present disclosure further provide a server, including a processor and a memory for storing the processor-executable instructions. The processor is configured to implement the application login method corresponding to the server in the above illustrated embodiment.

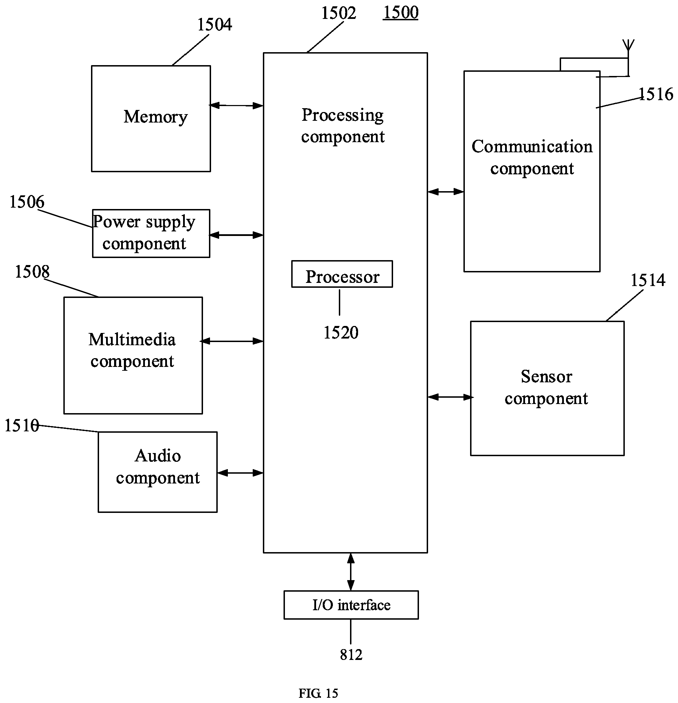

FIG 15 is a block diagram of an electronic device 1500 according to an exemplary embodiment. For example, the device 1500 may be a mobile phone, a computer, a digital broadcast terminal, a messaging device, a game console, a tablet device, a medical device, a fitness device, a personal digital assistant and the like.

Referring to FIG. 15, the device 1500 may include one or more of the following components: a processing component 1502, a memory 1504, a power supply component 1506, a multimedia component 1508, an audio component 1510, an input/output (I/O) interface 1512, a sensor component 1514, and a communication component 1516.

Generally, the processing component 1502 is configured to control the overall operations of the device 1500, such as operations associated with displaying, telephone calling, data communications, camera operations, and recording operations. The processing component 1502 may include one or more processors 1520 to execute instructions to complete all or part of the steps in the foregoing method. In addition, the processing component 1502 may include one or more modules to facilitate the interaction between the processing component 1502 and other components.

The memory 1504 is configured to store various data to support operations of the device 1500. Examples of the data include instructions of any application or method that can be run on the device 1500, contact data, phonebook data, messages, pictures and videos and the like. The memory 1504 can be implemented by any type of volatile or non-volatile storage device or their combination, such as static random access memory (SRAM), electrically erasable programmable read-only memory (EEPROM), erasable and Programmable read-only memory (EPROM), programmable read-only memory (PROM), read-only memory (ROM), magnetic memory, flash memory, magnetic disk or optical disk.

The power supply component 1506 is configured to supply power to various components of the device 1500. The power supply component 1506 may include a power management system, one or more power supplies, and other components associated with generating, managing, and distributing power for the device 1500.

The multimedia component 1508 includes a screen that provides an output interface between the device 1500 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or sliding operation, but also detect the duration and pressure related to the touch or sliding operation. In some embodiments, the multimedia component 1508 includes a front camera and/or a rear camera. When the device 1500 is in an operation mode, such as a shooting mode or a video mode, the front camera and/or the rear camera can receive external multimedia data. Each front camera and rear camera can be a fixed optical lens system or have focal length and optical zoom capabilities.

The audio component 1510 is configured to output and/or input audio signals. For example, the audio component 1510 includes a microphone (MIC), and when the device 1500 is in an operation mode, such as a call mode, a recording mode, and a voice recognition mode, the microphone is configured to receive external audio signals. The received audio signal may be further stored in the memory 1504 or transmitted via the communication component 1516.

The I/O interface 1512 provides an interface between the processing component 1502 and a peripheral interface module. The peripheral interface module may be a keyboard, a click wheel, a button, and the like. The button includes but not limits to a home button, a volume button, a start button and a lock button.

The sensor component 1514 includes one or more sensors for providing the device 1500 with state evaluation in various aspects. For example, the sensor component 1514 can detect the on/off state of the device 1500 and the relative positioning of the components. For example, the component is the display and the keypad of the device 1500. The sensor component 1514 can also detect the position change of the device 1500 or of a component of the device 1500, the presence or absence of contact between the user and the device 1500, the orientation or acceleration/deceleration of the device 1500, and the temperature change of the device 1500. The sensor component 1514 may also include an acceleration sensor, a gyroscope sensor, a magnetic sensor, a pressure sensor or a temperature sensor.

The communication component 1516 is configured to facilitate wired or wireless communication between the device 1500 and other devices. The device 1500 can access a wireless network based on a communication standard, such as Wi-Fi, 2G, or 3G, or a combination thereof. In an exemplary embodiment, the communication component 1516 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 1500 may be implemented by one or more application-specific integrated circuits (ASIC), digital signal processors (DSP), digital signal processing devices (DSPD), Programmable Logic Device (PLD), Field Programmable Gate Array (FPGA), controller, microcontroller, microprocessor, or other electronic component, so as to perform the method stated above.

The embodiments of the present disclosure further provide a computer-readable storage medium with instructions stored thereon, and when the instructions in the storage medium are executed by the processor of the computer device, the computer is enabled to execute the application login method corresponding to the server in the above illustrated embodiments.

The embodiments of the present disclosure further provide a computer program product containing instructions that, when run on a computer, enables the computer device to execute the application login method corresponding to the server in the above illustrated embodiments.

Those skilled in the art can easily think of other implementation solutions of the present disclosure after considering the specification and practicing the content disclosed herein. The present disclosure is intended to cover any variations, purposes or applicable changes of the present disclosure following the general principles thereof and including common knowledge or commonly used technical means in the technical field which are not disclosed herein. The specification and embodiments merely considered as illustrative, and the true scope and spirit of the present disclosure are pointed out by the claims. It should be appreciated that, the present disclosure is not limited to the precise structures that have been described above and illustrated in the accompanying drawings, and that various modifications and changes may be made without departing from the scope thereof. The scope of the present disclosure is only limited by the appended claims.

## Claims

1. A method for application login, comprising:
in response to a target user account's operation for triggering and displaying a target application login interface, acquiring a target login feature of the target user account, wherein the target login feature comprises at least one of geographical location information of the target user account or parameters of a device used for logging in;
determining, according to the target login feature, information of third-party login channels allowed for logging in the target application; and
displaying, according to the information of third-party login channels, corresponding third-party login icons on the target application login interface to allow the target user account to select a corresponding target third-party login channel to log in the target application.

2. The method according to claim 1, wherein the determining, according to the target login feature, information of third-party login channels allowed for logging in the target application comprises:
acquiring a login monitoring result of the third-party login channels, wherein the login monitoring result comprises third-party login channels that are supported to perform login by user accounts having different login features, and the login feature comprises at least one of geographical location information of a corresponding user account or parameters of a device used for logging in; and
selecting, from the login monitoring result, third-party login channels corresponding to the target login feature, and obtaining the information of third-party login channels allowed for logging in the target application accordingly.

3. The method according to claim 2, wherein the acquiring a login monitoring result of the third-party login channels comprises:
acquiring all user accounts' account login results for logging in the target application through different third-party login channels in a preset monitoring period, wherein the account login result at least comprises whether a corresponding user account successfully logged in the target application through a corresponding third-party login channel or not;
acquiring, according to all the account login results and the login feature of the user account corresponding to each of the account login results, login failure rates of different third-party login channels as for each distinct login feature; and
determining, according to the login failure rates of different third-party login channels as for each distinct login feature, a third-party login channel with a login failure rate below a preset failure rate threshold as a third-party login channel supported to log in by a user account having the distinct login feature, and obtaining the login monitoring result accordingly.

4. The method according to claim 2, wherein the login monitoring result further comprises a single-user login failure rate of the target user account through different third-party login channels;
the selecting, from the login monitoring result, the third-party login channels corresponding to the target login feature, and obtaining the information of third-party login channels allowed for logging in the target application, comprising:
selecting, from the login monitoring result, candidate third-party login channels corresponding to the target login feature; and
selecting a candidate third-party login channel with the single-user login failure rate below a preset single-user failure rate threshold, and obtaining the information of third-party login channels allowed for logging in the target application accordingly.

5. The method according to claim 4, further comprising:
acquiring the target user account's target login result for logging in the target application through different third-party login channels in a preset single-user monitoring period, wherein the target login result at least comprises whether the target user account successfully logged in the target application through a corresponding third-party login channel or not; and
acquiring, according to the target login result, the login failure rate of the target user account through different third-party login channels.

6. The method according to claim 2, further comprising:
acquiring the login monitoring result of the third-party login channels according to a preset acquisition period.

7. The method according to claim 1, wherein the displaying, according to the information of third-party login channels, corresponding third-party login icons on the target application login interface to allow the target user account to select a corresponding target third-party login channel to log in the target application, comprises:
acquiring a set of third-party login icons supported and displayed by the target application login interface; and
on the target application login interface, hiding third-party login icons in the set of third-party login icons that correspond to the third-party login channels not included in the information of third-party login channels to enable the third-party login icons displayed to correspond to the third-party channel information.

8. The method according to claim 1, wherein the determining, according to the target login feature, information of third-party login channels allowed for logging in the target application, comprises:
transmitting the target login feature to a server to trigger the server to determine, according to the target login feature, the information of third-party login channels allowed for logging in the target application and return the information of third-party login channels.

9. A method for application login, comprising:
receiving a target login feature of a target user account from user equipment, wherein the target login feature comprises at least one of geographical location information of the target user account or parameters of a device used for logging in;
determining, according to the target login feature, information of third-party login channels allowed for logging in a target application; and
transmitting the information of third-party login channels to the user equipment.

10. The method according to claim 9, wherein the determining, according to the target login feature, information of third-party login channels allowed for logging in a target application, comprises:
acquiring a login monitoring result of the third-party login channels, wherein the login monitoring result comprises third-party login channels that are supported to perform login by user accounts having different login features, and the login feature comprises at least one of geographical location information of a corresponding user account or parameters of a device used for logging in; and
selecting, from the login monitoring result, third-party login channels corresponding to the target login feature, and obtaining the information of third-party login channels allowed for logging in the target application accordingly.

11. The method according to claim 10, wherein the acquiring a login monitoring result of the third-party login channels, comprises:
acquiring all user accounts' account login results for logging in the target application through different third-party login channels in a preset monitoring period, wherein the account login result at least comprises whether a corresponding user account successfully logged in the target application through a corresponding third-party login channel or not;
acquiring, according to all the account login results and the login feature of the user account corresponding to each of the account login results, login failure rates of different third-party login channels as for each distinct login feature; and
determining, according to the login failure rates of different third-party login channels as for each distinct login feature, a third-party login channel with a login failure rate below a preset failure rate threshold as a third-party login channel supported to log in by the user account having the distinct login feature, and obtaining the login monitoring result accordingly.

12. The method according to claim 10, further comprising:
acquiring the login monitoring result of the third-party login channels according to a preset acquisition period.

13. An apparatus for application login, comprising:
an acquisition module, configured to, in response to a target user account's operation for triggering and displaying a target application login interface, acquire a target login feature of the target user account, wherein the target login feature comprises at least one of geographical location information of the target user account or parameters of a device used for logging in;
a determination module, configured to determine, according to the target login feature, information of third-party login channels allowed for logging in the target application; and
a display module, configured to display, according to the information of third-party login channels, corresponding third-party login icons on the target application login interface to allow the target user account to select a corresponding target third-party login channel to log in the target application.

14. The apparatus according to claim 13, wherein
the acquisition module is configured to acquire a login monitoring result of the third-party login channels, wherein the login monitoring result comprises third-party login channels supported to perform login by user accounts having different login features, and the login features comprise at least one of geographical location information of a corresponding user account or parameters of a device used for logging in; and
the apparatus further comprises: a selecting module, configured to select, from the login monitoring result, third-party login channels corresponding to the target login feature, and obtain the information of third-party login channels allowed for logging in the target application accordingly.

15. The apparatus according to claim 14, wherein
the acquisition module is configured to acquire all user accounts' account login results for logging in the target application through different third-party login channels in a preset monitoring period, wherein the account login result at least comprises whether a corresponding user account successfully logged in the target application through a corresponding third-party login channel or not;
the acquisition module is configured to acquire, according to all the account login results and the login feature of the user account corresponding to each of the account login results, login failure rates of different third-party login channels as for each distinct login feature; and
the determination module is configured to determine, according to the login failure rates of different third-party login channels as for each distinct login feature, a third-party login channel with a login failure rate below a preset failure rate threshold as a third-party login channel supported to log in by a user account having the distinct login feature, and obtain the login monitoring result accordingly.

16. The apparatus according to claim 14, wherein the login monitoring result further comprise a single-user login failure rate of the target user account through different third-party login channels;
the selecting module is configured to select candidate third-party login channels corresponding to the target login feature from the login monitoring result; and
the selecting module is configured to select a candidate third-party login channel with the single-user login failure rate below a preset single-user failure rate threshold, so as obtain the information of third-party login channels allowed for logging in the target application accordingly.

17. The apparatus according to claim 16, wherein
the acquisition module is configured to acquire the target user account's target login result for logging in the target application through different third-party login channels in a preset single-user monitoring period, wherein the target login result at least comprises whether the target user account successfully logged in the target application through a corresponding third-party login channel or not; and
the acquisition module is configured to acquire, according to the target login result, the login failure rate of the target user account through different third-party login channels.

18. The apparatus according to claim 14, wherein
the acquisition module is configured to acquire the login monitoring result of the third-party login channels according to a preset acquisition period.

19. The apparatus according to claim 13, wherein
the acquisition module is configured to acquire a set of third-party login icons supported and displayed by the target application login interface; and
the display module is configured to, on the target application login interface, hide third-party login icons in the set of third-party login icons that correspond to the third-party login channels not included in the information of third-party login channels to enable the third-party login icons displayed to correspond to the third-party channel information.

20. The apparatus according to claim 13, wherein further comprising:
a transmission module, configured to transmit the target login feature to a server to trigger the server to determine, according to the target login feature, the information of third-party login channels allowed for logging in the target application and return the information of third-party login channels.

21. An apparatus for application login, comprising:
a reception module, configured to receive a target login feature of a target user account from user equipment, wherein the target login feature comprises at least one of geographical location information of the target user account or parameters of a device used for logging in;
a determination module, configured to determine, according to the target login feature, information of third-party login channels allowed for logging in a target application; and
a transmission module, configured to transmit the information of third-party login channels to the user equipment.

22. The apparatus according to claim 21, further comprising:
an acquisition module, configured to acquire a login monitoring result of the third-party login channels, wherein the login monitoring result comprises third-party login channels supported to perform login by user accounts having different login features, and the login feature comprises at least one of geographical location information of a corresponding user account or parameters of a device used for logging in; and
a selecting module, configured to select, from the login monitoring result, third-party login channels corresponding to the target login feature, and obtain the information of third-party login channels allowed for logging in the target application accordingly.

23. The apparatus according to claim 22, wherein
the acquisition module is configured to acquire all user accounts' account login results for logging in the target application through different third-party login channels in a preset monitoring period, wherein the account login result at least comprises whether a corresponding user account successfully logged in the target application through a corresponding third-party login channel or not;
the acquisition module is configured to acquire, according to all the account login results and the login feature of the user account corresponding to each of the account login results, login failure rates of different third-party login channels as for each distinct login feature; and
the determination module is configured to determine, according to the login failure rate of different third-party login channels as for each distinct login feature, a third-party login channel with a login failure rate below a preset failure rate threshold as a third-party login channel supported to log in by the user account having the distinct login feature, and obtain the login monitoring result accordingly.

24. The apparatus according to claim 22, wherein
the acquisition module is configured to acquire the login monitoring result of the third-party login channels according to a preset acquisition period.

25. An electronic device, comprising: a processor and a memory for storing processor-executable instructions;
wherein the processor is configured to execute the instructions to implement operations of:
in response to a target user account's operation for triggering and displaying a target application login interface, acquiring a target login feature of the target user account, wherein the target login feature comprises at least one of geographical location information of the target user account or parameters of a device used for logging in;
determining, according to the target login feature, information of third-party login channels allowed for logging in the target application; and
displaying, according to the information of third-party login channels, corresponding third-party login icons on the target application login interface to allow the target user account to select a corresponding target third-party login channel to log in the target application.

26. A server, comprising:
a processor; and
a memory for storing processor-executable instructions;
wherein the processor is configured to implement operations of:
receiving a target login feature of a target user account from user equipment, wherein the target login feature comprises at least one of geographical location information of the target user account or parameters of a device used for logging in;
determining, according to the target login feature, information of third-party login channels allowed for logging in a target application; and
transmitting the information of third-party login channels to the user equipment.

27. A system for application login, wherein the application login system comprises the apparatus for application login according to any one of claims 13 to 20 and the apparatus for application login according to any one of claims 21 to 24; or the system comprises the electronic device according to claim 25 and the server according to claim 26.

28. A computer-readable storage medium storing with instructions, wherein the instructions, when executed by a processor, are used for implementing operations of:
in response to a target user account's operation for triggering and displaying a target application login interface, acquiring a target login feature of the target user account, wherein the target login feature comprises at least one of geographical location information of the target user account or parameters of a device used for logging in;
determining, according to the target login feature, information of third-party login channels allowed for logging in the target application; and
displaying, according to the information of third-party login channels, corresponding third-party login icons on the target application login interface to allow the target user account to select a corresponding target third-party login channel to log in the target application.

29. A computer-readable storage medium storing with instructions, wherein the instructions, when executed by a processor, are used for implementing operations of:
receiving a target login feature of a target user account from user equipment, wherein the target login feature comprises at least one of geographical location information of the target user account or parameters of a device used for logging in;
determining, according to the target login feature, information of third-party login channels allowed for logging in a target application; and
transmitting the information of third-party login channels to the user equipment.
